# EUROPÄISCHE PATENTANMELDUNG

(11) **EP 2 420 351 A1**
(43) Veröffentlichungstag der Anmeldung: **22.02.2012**
(21) Anmeldenummer: 10173361.6
(22) Anmeldetag: 19.08.2010
(51) Int. Cl.: B23Q 15/08, B23Q 15/12

(54) **Steuereinrichtung für eine Bearbeitungsmaschine mit automatischer Drehzahlvariation einer Werkstückaufnahme**

(71) Anmelder: SIEMENS AKTIENGESELLSCHAFT, 80333 München (DE)
(72) Erfinder: Bretschneider, Jochen, 73732, Esslingen (DE); Kubik, Alexander, 91058, Erlangen (DE); Köpken, Hans-Georg, 91056, Erlangen (DE); Schäfers, Elmar, 90763, Fürth (DE)

(57) **Zusammenfassung**

Eine Bearbeitungsmaschine weist eine Werkstückaufnahme (1) für ein Werkstück (2) auf, die mittels eines Spindelantriebs (3) rotiert wird. Die Bearbeitungsmaschine weist ein Bearbeitungswerkzeug (5) auf, mittels dessen das Werkstück (2) während des Rotierens der Werkstückaufnahme (1) bearbeitet wird. Eine Steuereinrichtung (6) für die Bearbeitungsmaschine, ist derart ausgebildet, dass sie selbsttätig
- anhand ihr vorgegebener Ansteuerbefehle (A) eine Nenndrehzahl (n0) ermittelt, mit der die Werkstückaufnahme (1) rotieren würde, wenn die Steuereinrichtung (6) die vorgegebenen Ansteuerbefehle (A) an den Spindelantrieb (3) ausgäbe,
- anhand der Nenndrehzahl (n0) und einer maximal zulässigen Belastung des Spindelantriebs (3) eine Oszillationsamplitude (δn) und/oder eine Oszillationsfrequenz (f) ermittelt,
- die ihr vorgegebenen Ansteuerbefehle (A) anhand der Oszillationsamplitude (δn) und der Oszillationsfrequenz (f) modifiziert und
- die modifizierten Ansteuerbefehle (A') an den Spindelantrieb (3) ausgibt und dadurch der Werkstückaufnahme (1) direkt oder indirekt eine Solldrehzahl (n^{*}) vorgibt, die mit der Oszillationsamplitude (δn)und der Oszillationsfrequenz (f) um die Nenndrehzahl (n0) oszilliert.

## Beschreibung

Die vorliegende Erfindung betrifft eine Steuereinrichtung für eine Bearbeitungsmaschine,
- wobei die Bearbeitungsmaschine eine Werkstückaufnahme für ein Werkstück aufweist, die mittels eines Spindelantriebs rotiert wird,
- wobei die Bearbeitungsmaschine ein Bearbeitungswerkzeug aufweist, mittels dessen das Werkstück während des Rotierens der Werkstückaufnahme bearbeitet wird.

Die vorliegende Erfindung betrifft weiterhin ein Systemprogramm, das Maschinencode umfasst, der von einer derartigen Steuereinrichtung unmittelbar abarbeitbar ist.

Derartige Steuereinrichtungen und die zugehörigen Systemprogramme sind allgemein bekannt. Insbesondere arbeitet jede numerische Steuerung einer Werkzeugmaschine auf diese Weise.

Im Stand der Technik wird der Steuereinrichtung ein Bearbeitungsprogramm vorgegeben. Das Bearbeitungsprogramm - oftmals als Teileprogramm bezeichnet - umfasst Ansteuerbefehle für den Spindelantrieb und Ansteuerbefehle für das Bearbeitungswerkzeug. Die Steuereinrichtung gibt die für den Spindelantrieb bestimmten Ansteuerbefehle an den Spindelantrieb aus, die für das Bearbeitungswerkzeug bestimmten Ansteuerbefehle an das Bearbeitungswerkzeug. Auf Grund der an den Spindelantrieb ausgegebenen Ansteuerbefehle wird der Werkstückaufnahme eine Solldrehzahl vorgegeben. Auf Grund der an das Bearbeitungswerkzeug ausgegebenen Ansteuerbefehle wird eine Anstellung des Bearbeitungswerkzeugs an das Werkstück eingestellt. Die Ansteuerbefehle für den Spindelantrieb und das Bearbeitungswerkzeug sind derart koordiniert, dass eine durch das Bearbeitungsprogramm gewünschte Bearbeitung des Werkstücks bewirkt wird.

In vielen Fällen wird durch die obenstehend beschriebene Vorgehensweise eine vollauf befriedigende Bearbeitung des Werkstücks erreicht. In manchen Fällen ergibt sich jedoch ein so genanntes Rattern, d. h. eine wellige Bearbeitung des Werkstücks durch das Bearbeitungswerkzeug, die im Betrieb oftmals sogar hörbar ist. Das Rattern wird hervorgerufen durch Störanregungen, durch die das das Werkstück bearbeitende Bearbeitungswerkzeug zu Schwingungen angeregt wird.

Es ist rein theoretisch denkbar, das Ausmaß, in dem das Bearbeitungswerkzeug das Werkstück bearbeitet, zu reduzieren. Beispielsweise kann bei einem spanabhebenden Bearbeitungswerkzeug die Schnitttiefe und/oder die Schnittbreite reduziert werden. Zum einen führt dies jedoch zu einer verringerten Produktivität. Zum anderen wäre zu diesem Zweck eine Onlinemodifikation des Teileprogramms erforderlich, was in der Regel nicht möglich ist, weil die Steuereinrichtung die hierfür erforderliche Funktionalität nicht aufweist.

Weiterhin ist es möglich, die Ausführungsgeschwindigkeit, mit der die Ansteuerbefehle abgearbeitet werden, statisch zu variieren. Zum statischen Variieren ist es ausreichend, dass ein Benutzer der Bearbeitungsmaschine über ein entsprechendes Bedienelement die Ausführungsgeschwindigkeit manuell einstellt. Diese Vorgehensweise führt jedoch nicht in allen Fällen zu befriedigenden Ergebnissen. Weiterhin ist auch diese Vorgehensweise mit einer Reduzierung der Produktivität der Bearbeitungsmaschine verbunden.

Es ist auch schon bekannt, dass die Steuereinrichtung selbsttätig die ihr vorgegebenen Ansteuerbefehle anhand einer Oszillationsamplitude und einer Oszillationsfrequenz modifiziert und die modifizierten Ansteuerbefehle an den Spindelantrieb ausgibt. Dadurch gibt die Steuereinrichtung der Werkstückaufnahme direkt oder indirekt eine Solldrehzahl vor, die mit der Oszillationsamplitude und der Oszillationsfrequenz um eine Nenndrehzahl oszilliert. Die Nenndrehzahl ist hierbei diejenige Drehzahl, mit der der Werkstückaufnahme rotieren würde, wenn die Steuereinrichtung die vorgegebenen Ansteuerbefehle unmodifiziert an den Spindelantrieb ausgäbe.

Beim letztgenannten Stand der Technik muss der Benutzer der Bearbeitungsmaschine die Oszillationsamplitude und die Oszillationsfrequenz auf Grund seiner Erfahrung manuell einstellen. Diese Vorgehensweise ist umständlich, mühsam und zeitaufwändig. Sie führt weiterhin insbesondere auf Grund des Umstands, weil zwei voneinander unabhängige Größen eingestellt werden müssen, oftmals zu suboptimalen Ergebnissen.

Die Aufgabe der vorliegenden Erfindung besteht darin, Möglichkeiten zu schaffen, mittels derer ein effizienter Betrieb der Bearbeitungsmaschine erreichbar ist.

Die Aufgabe wird durch eine Steuereinrichtung mit den Merkmalen des Anspruchs 1 gelöst. Vorteilhafte Ausgestaltungen der erfindungsgemäßen Steuereinrichtung sind Gegenstand der abhängigen Ansprüche 2 bis 10.

Erfindungsgemäß ist vorgesehen, dass die Steuereinrichtung derart ausgebildet ist, dass sie selbsttätig
- anhand ihr vorgegebener Ansteuerbefehle eine Nenndrehzahl ermittelt, mit der die Werkstückaufnahme rotieren würde, wenn die Steuereinrichtung die vorgegebenen Ansteuerbefehle an den Spindelantrieb ausgäbe,
- anhand der Nenndrehzahl und einer maximal zulässigen Belastung des Spindelantriebs eine Oszillationsamplitude und/ oder eine Oszillationsfrequenz ermittelt,
- die ihr vorgegebenen Ansteuerbefehle anhand der Oszillationsamplitude und der Oszillationsfrequenz modifiziert und
- die modifizierten Ansteuerbefehle an den Spindelantrieb ausgibt und dadurch der Werkstückaufnahme direkt oder indirekt eine Solldrehzahl vorgibt, die mit der Oszillationsamplitude und der Oszillationsfrequenz um die Nenndrehzahl oszilliert.

Die Art der Oszillation kann nach Bedarf gewählt werden. Vorzugsweise ist vorgesehen, dass die Steuereinrichtung die ihr vorgegebenen Ansteuerbefehle derart modifiziert, dass die Solldrehzahl sinusförmig oder dreieckförmig um die Nenndrehzahl oszilliert.

Die Oszillationsamplitude ist vorzugsweise mindestens das 0,1-fache und maximal das 0,25-fache der Nenndrehzahl. Besonders bevorzugt liegt die Oszillationsamplitude zwischen dem 0,12-fachen und dem 0,18-fachen der Nenndrehzahl, beispielsweise beim 0,15-fachen.

Auch die Oszillationsfrequenz kann nach Bedarf gewählt sein. In der Regel ist sie mindestens das 0,05-fache und maximal das 0,40-fache der Nenndrehzahl. Vorzugsweise liegt die Oszillationsfrequenz zwischen dem 0,1-fachen und dem 0,25-fachen der Nenndrehzahl.

Die Ratterunterdrückung ist umso besser, je größer die Oszillationsamplitude ist. Vorzugsweise ist daher vorgesehen, dass die Steuereinrichtung die Oszillationsfrequenz und die Oszillationsamplitude zunächst auf Maximalwerte setzt, prüft, ob mit diesen Werten die maximal zulässige Belastung des Spindelantriebs eingehalten wird, und erforderlichenfalls die Oszillationsfrequenz absenkt, die Oszillationsamplitude jedoch beibehält.

In einer weiter bevorzugten Ausgestaltung der vorliegenden Erfindung ist vorgesehen, dass die Steuereinrichtung derart ausgebildet ist, dass sie vom Spindelantrieb und/oder vom Bearbeitungswerkzeug Istgrößen entgegen nimmt und anhand der Istgrößen selbsttätig einen für die Bearbeitung des Werkstücks durch das Bearbeitungswerkzeug charakteristischen Ratterwert ermittelt.

Diese Vorgehensweise ist für verschiedene weitergehende Ausgestaltungen sinnvoll.

So ist es beispielsweise möglich, dass die Steuereinrichtung den Ratterwert über eine Mensch-Maschine-Schnittstelle an einen Benutzer der Bearbeitungsmaschine ausgibt. Alternativ oder zusätzlich ist es möglich, dass die Steuereinrichtung die vorgegebenen Ansteuerbefehle an den Spindelantrieb ausgibt, den hierbei auftretenden Ratterwert ermittelt, die ihr vorgegebenen Ansteuerbefehle modifiziert, wenn der Ratterwert oberhalb eines Grenzwerts liegt, und anderenfalls die ihr vorgegebenen Ansteuerbefehle weiter unmodifiziert an den Spindelantrieb ausgibt.

Weiterhin ist es möglich, die Ermittlung des Ratterwertes dadurch zu nutzen, dass die Steuereinrichtung zunächst einen Messlauf durchführt, in dem sie die Oszillationsamplitude und/oder die Oszillationsfrequenz variiert, während des Messlaufs jeweils den Ratterwert ermittelt und sodann die Oszillationsamplitude und/oder die Oszillationsfrequenz auf diejenigen Werte setzt, bei denen der Ratterwert minimal ist.

In einer weiter bevorzugten Ausgestaltung der vorliegenden Erfindung ist vorgesehen, dass die Steuereinrichtung derart ausgebildet ist, dass ihr über eine Mensch-Maschine-Schnittstelle von einem Benutzer der Bearbeitungsmaschine ein Ratterunterdrückungsbefehl vorgebbar ist, sie die ihr vorgegebenen Ansteuerbefehle nur dann modifiziert, wenn ihr der Ratterunterdrückungsbefehl vorgegeben wird, und sie anderenfalls die ihr vorgegebenen Ansteuerbefehle unmodifiziert an den Spindelantrieb ausgibt.

Die Aufgabe wird weiterhin durch ein Systemprogramm mit den Merkmalen des Anspruchs 11 gelöst.

Erfindungsgemäß ist vorgesehen, dass die Abarbeitung des Maschinenprogramms eines Systemprogramms der eingangs genannten Art durch die Steuereinrichtung bewirkt, dass die Steuereinrichtung derart ausgebildet wird, dass sie selbsttätig
- anhand ihr vorgegebener Ansteuerbefehle eine Nenndrehzahl ermittelt, mit der die Werkstückaufnahme rotieren würde, wenn die Steuereinrichtung die vorgegebenen Ansteuerbefehle an den Spindelantrieb ausgäbe,
- anhand der Nenndrehzahl und einer maximal zulässigen Belastung des Spindelantriebs eine Oszillationsamplitude und/ oder eine Oszillationsfrequenz ermittelt,
- die ihr vorgegebenen Ansteuerbefehle anhand der Oszillationsamplitude und der Oszillationsfrequenz modifiziert und
- die modifizierten Ansteuerbefehle an den Spindelantrieb ausgibt und dadurch der Werkstückaufnahme direkt oder indirekt eine Solldrehzahl vorgibt, die mit der Oszillationsamplitude und der Oszillationsfrequenz um die Nenndrehzahl oszilliert.

Die Abarbeitung des Maschinencodes durch die Steuereinrichtung kann selbstverständlich zusätzlich bewirken, dass die Steuereinrichtung gemäß den obenstehend beschriebenen vorteilhaften Ausgestaltungen ausgebildet wird.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Bearbeitungsmaschine und eine zugehörige Steuereinrichtung,
- FIG 2: ein Ablaufdiagramm,
- FIG 3 und 4: Zeitdiagramme und
- FIG 5 bis 8: Ablaufdiagramme.

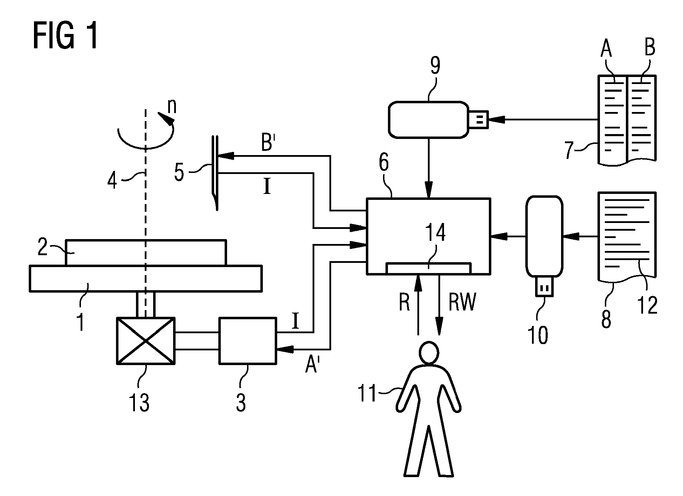

Gemäß FIG 1 weist eine Bearbeitungsmaschine eine Werkstückaufnahme 1 auf. Von der Werkstückaufnahme 1 wird ein Werkstück 2 aufgenommen und gehalten.

Die Werkstückaufnahme 1 wird von einem Spindelantrieb 3 angetrieben. Mittels des Spindelantriebs 3 ist die Werkstückaufnahme 1 - und mit ihr das Werkstück 2 - mit einer Drehzahl n um eine Drehachse 4 rotierbar. Die Drehachse 4 verläuft gemäß der Darstellung von FIG 1 vertikal. Die Werkstückaufnahme 1 ist daher bei der Bearbeitungsmaschine von FIG 1 als Drehteller ausgebildet. Alternativ könnte die Drehachse 4 jedoch eine andere Orientierung aufweisen, insbesondere horizontal verlaufen.

Die Bearbeitungsmaschine weist weiterhin ein Bearbeitungswerkzeug 5 auf. Mittels des Bearbeitungswerkzeugs 5 ist das Werkstück 2 bearbeitbar, beispielsweise spanabhebend bearbeitbar. Das Bearbeiten des Werkstücks 2 erfolgt, während die Werkstückaufnahme 1 und das Werkstück 2 um die Drehachse 4 rotieren.

Die Bearbeitungsmaschine wird von einer Steuereinrichtung 6 gesteuert. Die Steuereinrichtung 6 ist in der Regel als softwareprogrammierbare Steuereinrichtung ausgebildet. Die Wirkungsweise der Steuereinrichtung 6 wird daher durch Computerprogramme 7, 8 bestimmt, die von der Steuereinrichtung 6 abgearbeitet werden.

Gemäß der Darstellung von FIG 1 sind zwei Computerprogramme 7, 8 vorhanden, nämlich ein Teileprogramm 7 und ein Systemprogramm 8. Beide Computerprogramme 7, 8 können der Steuereinrichtung 6 über entsprechende Speichermedien 9, 10 zugeführt werden. Dargestellt sind in FIG 1 Ausgestaltungen der Speichermedien 9, 10 als USB-Memorysticks. Es sind jedoch beliebige andere Ausgestaltungen der Speichermedien 9, 10 möglich, beispielsweise als CD-ROM, als SD-Speicherkarten und - insbesondere im Falle des Systemprogramms 8 - als gesockeltes oder gelötetes Flash-EPROM.

Das Teileprogramm 7 ist in der Regel von einem Benutzer 11 der Bearbeitungsmaschine erstellbar und gegebenenfalls änderbar. Es enthält Ansteuerbefehle A für den Spindelantrieb 3 und Ansteuerbefehle B für das Bearbeitungswerkzeug 5. Die Ansteuerbefehle A für den Spindelantrieb 3 und die Ansteuerbefehle B für das Bearbeitungswerkzeug 5 sind derart miteinander koordiniert, dass die Bearbeitungsmaschine eine durch das Teileprogramm 7 definierte gewünschte Bearbeitung des Werkstücks 2 bewirkt.

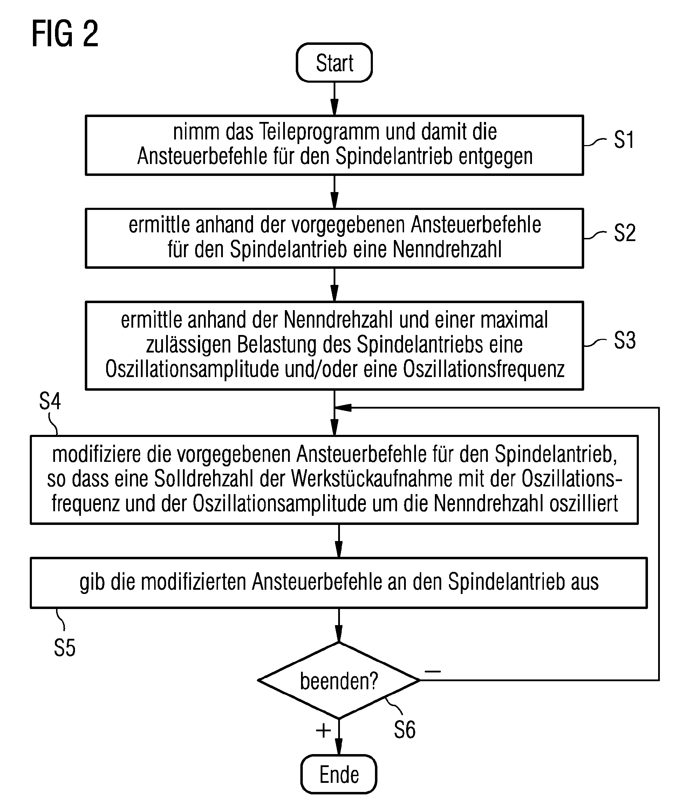

Das Systemprogramm 8 ist in der Regel vom Hersteller der Steuereinrichtung 6 in der Steuereinrichtung 6 hinterlegt. Es umfasst Maschinencode 12, der von der Steuereinrichtung 6 unmittelbar abarbeitbar ist. Das Systemprogramm 8 bestimmt die Art und Weise, ob und gegebenenfalls wie die Steuereinrichtung 6 aus den ihr vorgegebenen Ansteuerbefehlen A, B des Teileprogramms 7 Ansteuerbefehle A', B' für den Spindelantrieb 3 und das Bearbeitungswerkzeug 5 ermittelt. Insbesondere bewirkt die Abarbeitung des Maschinencodes 12 des Systemprogramms 8 durch die Steuereinrichtung 6, dass die Steuereinrichtung 6 derart ausgebildet wird, dass sie so arbeitet, wie dies nachfolgend in Verbindung mit FIG 2 erläutert wird.

Gemäß FIG 2 nimmt die Steuereinrichtung 6 in einem Schritt S1 das Teileprogramm 7 entgegen. Damit sind ihr (unter anderem) die (ursprünglichen) Ansteuerbefehle A für den Spindelantrieb 3 vorgegeben.

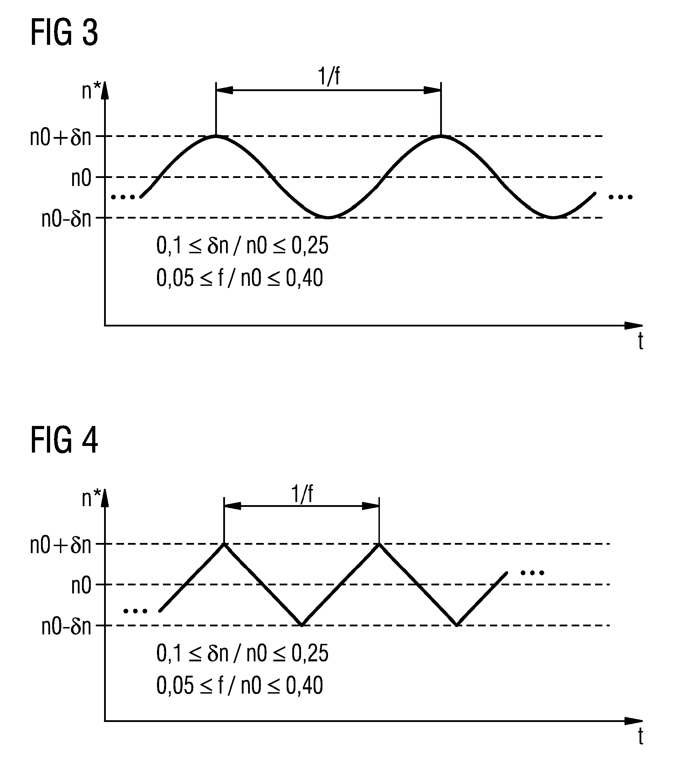

In einem Schritt S2 ermittelt die Steuereinrichtung 6 anhand der ihr vorgegebenen Ansteuerbefehle A für den Spindelantrieb 3 eine Nenndrehzahl n0. Die Nenndrehzahl n0 ist - siehe die FIG 3 und 4 - diejenige Drehzahl, mit der die Werkstückaufnahme 1 um die Drehachse 4 rotieren würde, wenn die Steuereinrichtung 6 die vorgegebenen Ansteuerbefehle A unmodifiziert an den Spindelantrieb 3 ausgäbe. Wie sich aus den FIG 3 und 4 ergibt, ist die Nenndrehzahl n0 konstant. Sie variiert also nicht mit der Zeit t.

In einem Schritt S3 ermittelt die Steuereinrichtung 6 eine Oszillationsamplitude δn und/oder eine Oszillationsfrequenz f. Die Ermittlung erfolgt anhand der Nenndrehzahl n0 und einer maximal zulässigen Belastung des Spindelantriebs 3. Soweit erforderlich, berücksichtigt die Steuereinrichtung 6 weitere Daten, beispielsweise ein Trägheitsmoment der Werkstückaufnahme 1 einschließlich Werkstück 2, eine Übersetzung eines Getriebes 13, das zwischen dem Spindelantrieb 3 und der Werkstückaufnahme 1 angeordnet ist, usw.

In einem Schritt S4 modifiziert die Steuereinrichtung 6 die ihr durch das Teileprogramm 7 vorgegebenen Ansteuerbefehle A für den Spindelantrieb 3. In einem Schritt S5 gibt die Steuereinrichtung 6 die modifizierten Ansteuerbefehle A' an den Spindelantrieb 3 aus. Sie gibt dadurch der Werkstückaufnahme 1 eine Solldrehzahl n* vor. Die Solldrehzahl n* oszilliert gemäß den FIG 3 und 4 mit der Oszillationsfrequenz f und der Oszillationsamplitude δn um die Nenndrehzahl n0.

Es ist möglich, dass die Ansteuerbefehle A, A' Drehzahlsollwerte sind. In diesem Fall gibt die Steuereinrichtung 6 der Werkstückaufnahme 1 die Solldrehzahl n* direkt vor. Alternativ kann es sich bei den Ansteuerbefehlen A, A' um Lagesollwerte handeln. In diesem Fall ist die Solldrehzahl n* indirekt durch die Abfolge der Lagesollwerte bestimmt.

In einem Schritt S6 prüft die Steuereinrichtung 6, ob die Ansteuerung der Bearbeitungsmaschine beendet werden soll. Wenn dies der Fall ist, ist die Vorgehensweise von FIG 2 beendet. Anderenfalls geht die Steuereinrichtung 6 zum Schritt S4 zurück.

Obenstehend wurde nur die Modifizierung der Ansteuerbefehle A für den Spindelantrieb 3 erläutert. Gegebenenfalls werden jedoch auch die Ansteuerbefehle B für das Bearbeitungswerkzeug 5 entsprechend modifiziert. Das Modifizieren erfolgt jedoch nur dann, wenn dies erforderlich ist, um die Koordinierung der Ansteuerbefehle A für den Spindelantrieb 3 und der Ansteuerbefehle B für das Bearbeitungswerkzeug 5 aufrecht zu erhalten.

Die Art und Weise, wie die Solldrehzahl n* um die Nenndrehzahl n0 oszilliert, kann nach Bedarf bestimmt sein. In der Regel oszilliert die Solldrehzahl n* entweder entsprechend der Darstellung von FIG 3 sinusförmig oder entsprechend der Darstellung von FIG 4 (symmetrisch) dreieckförmig um die Nenndrehzahl n0.

Die Oszillationsamplitude δn kann nach Bedarf bestimmt sein. In der Regel beträgt die Oszillationsamplitude δn gemäß den FIG 3 und 4 mindestens das 0,1-fache und maximal das 0,25-fache der Nenndrehzahl n0. Wenn also - rein beispielhaft - die Nenndrehzahl n0 bei 0,5 Umdrehungen/Sekunde liegt, liegt die Oszillationsamplitude δn vorzugsweise zwischen 0,05 Umdrehungen/Sekunde und 0,125 Umdrehungen/Sekunde. Besonders bevorzugt sind Werte zwischen dem 0,12-fachen und dem 0,18-fachen der Nenndrehzahl n0. Gemäß obigem Zahlenbeispiel also 0,06 Umdrehungen/Sekunde bis 0,09 Umdrehungen/Sekunde. Optimal erscheinen nach derzeitigem Kenntnisstand Werte von ca. dem 0,15-fachen der Nenndrehzahl n0, gemäß obigem Zahlenbeispiel also Werte von ca. 0,075 Umdrehungen/Sekunde.

In analoger Weise kann auch die Oszillationsfrequenz f nach Bedarf bestimmt sein. Insbesondere liegt die Oszillationsfrequenz f in der Regel zwischen dem 0,05-fachen und dem 0,40-fachen der Nenndrehzahl n0. Bevorzugt sind Werte, die zwischen dem 0,1-fachen und dem 0,25-fachen der Nenndrehzahl n0 liegen. Wenn also - wieder rein beispielhaft - die Nenndrehzahl n0 bei 0,5 Umdrehungen/Sekunde liegt, liegt die Oszillationsfrequenz f in der Regel zwischen 0,025 Hz und 0,2 Hz, bevorzugt zwischen 0,05 Hz und 0,125 Hz.

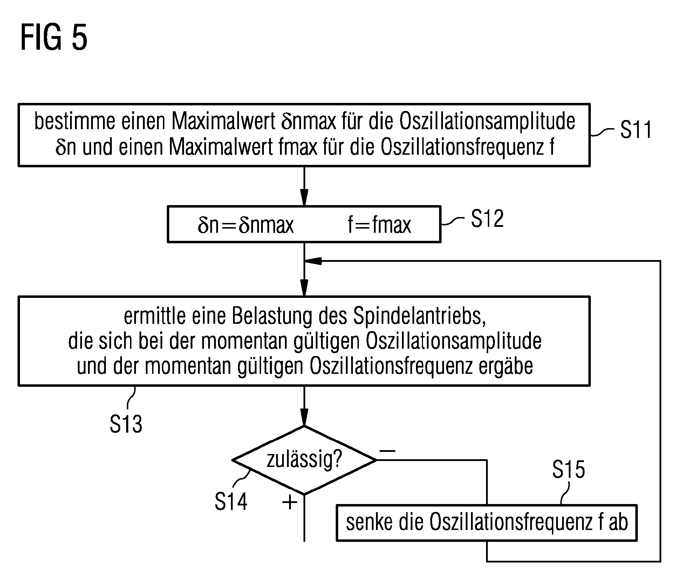

Nachfolgend werden in Verbindung mit den FIG 5 bis 8 verschiedene vorteilhafte Ausgestaltungen des obenstehend erläuterten Grundprinzips beschrieben. Hierbei wird nur auf die Änderungen und Ergänzungen des Grundprinzips näher eingegangen. Die übrigen Ausführungen zu den FIG 1 bis 4 sind weiterhin anwendbar. Es sei angemerkt, dass auch die vorteilhaften Ausgestaltungen der Steuereinrichtung 6 selbstverständlich durch das Ausführen des Maschinencodes 12 des Systemprogramms 8 bewirkt werden.

In Verbindung mit FIG 5 wird ein mögliches Verfahren zur Bestimmung der Oszillationsamplitude δn und/oder der Oszillationsfrequenz f näher erläutert. FIG 5 zeigt also eine mögliche Ausgestaltung des Schrittes S3 von FIG 2.

Gemäß FIG 5 bestimmt die Steuereinrichtung 6 in einem Schritt S11 zunächst Maximalwerte δnmax und fmax für die Oszillationsamplitude δn und die Oszillationsfrequenz f. In einem Schritt S12 setzt die Steuereinrichtung 6 die Oszillationsamplitude δn und die Oszillationsfrequenz f auf die im Schritt S11 bestimmten Maximalwerte δnmax, fmax.

In einem Schritt S13 ermittelt die Steuereinrichtung 6 eine Belastung des Spindelantriebs 3, die sich bei der momentan gültigen Oszillationsamplitude δn und der momentan gültigen Oszillationsfrequenz f ergäbe. In einem Schritt S14 prüft die Steuereinrichtung 6, ob die für die gültigen Werte der Oszillationsamplitude δn und der Oszillationsfrequenz f ermittelte Belastung des Spindelantriebs 3 zulässig ist, ob also eine maximal zulässige Belastung des Spindelantriebs 3 eingehalten wird. Wird die maximal zulässige Belastung eingehalten, ist die Vorgehensweise von FIG 5 abgeschlossen. Die endgültigen Werte für die Oszillationsamplitude δn und die Oszillationsfrequenz f sind ermittelt. Wird die maximal zulässige Belastung nicht eingehalten, muss mindestens einer der momentan gültigen Werte für die Oszillationsamplitude δn und die Oszillationsfrequenz f abgesenkt werden. Die Steuereinrichtung 6 geht daher in diesem Fall zu einem Schritt S15 über, in dem dies erfolgt.

Prinzipiell ist es möglich, im Schritt S15 sowohl die Oszillationsamplitude δn als auch die Oszillationsfrequenz f abzusenken, gegebenenfalls auch alternierend. Weiterhin ist es prinzipiell möglich, nur die Oszillationsamplitude δn abzusenken, die Oszillationsfrequenz f jedoch beizubehalten. Vorzugsweise wird entsprechend der Darstellung in FIG 5 im Schritt S15 die Oszillationsfrequenz f abgesenkt. Die Oszillationsamplitude δn wird hingegen (ergänze: auf ihrem Maximalwert δnmax) beibehalten.

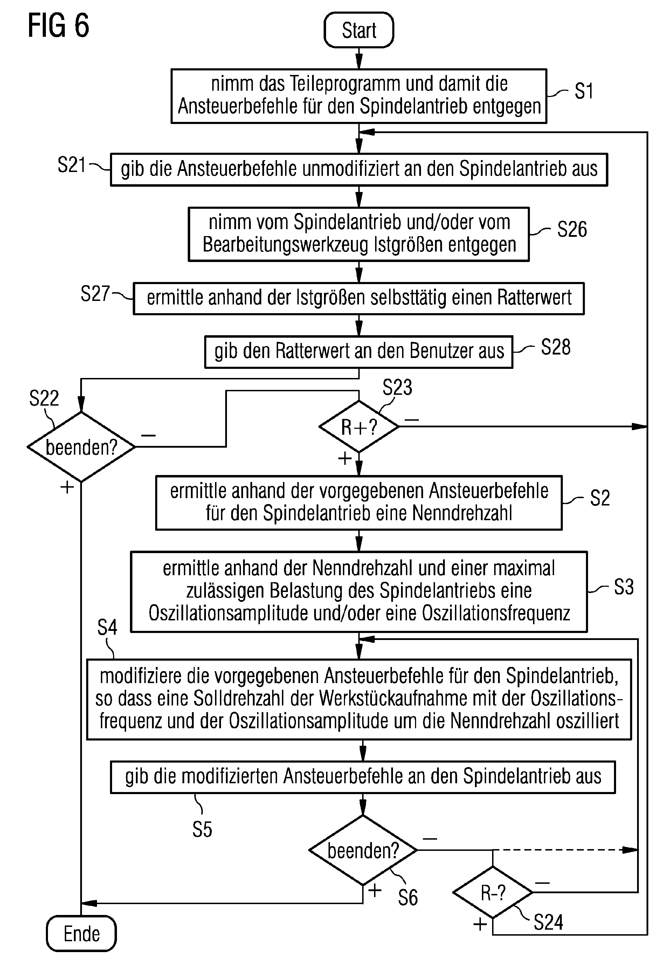

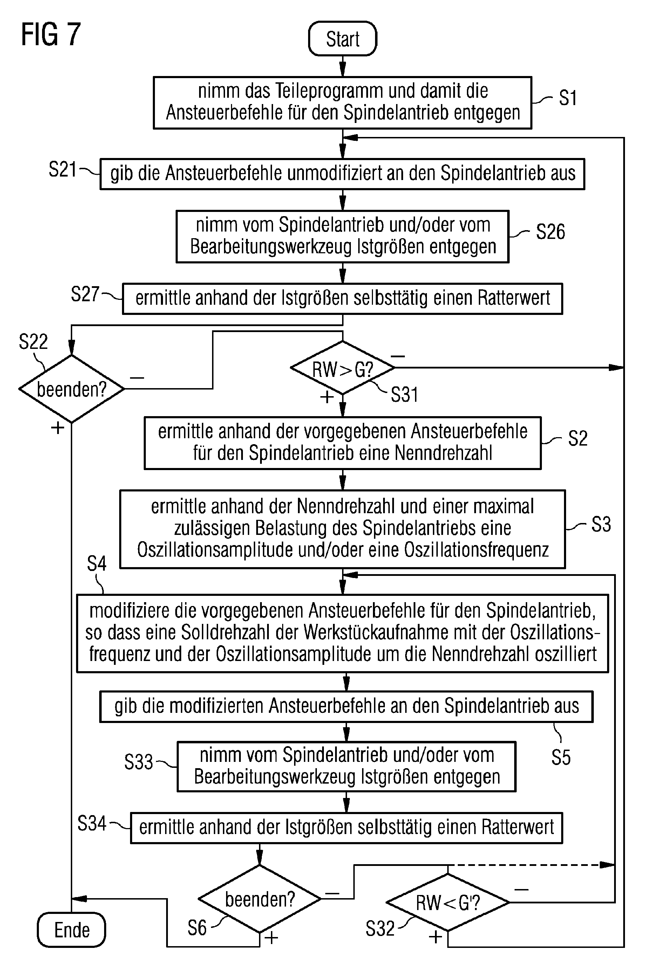

Soweit bisher erläutert, erfolgt die Modifizierung der Ansteuerbefehle A für den Spindelantrieb 3 stets und unbedingt. Dies ist zwar möglich, jedoch nicht zwingend erforderlich. Es kann auch von Bedingungen abhängig sein, ob das Modifizieren der Ansteuerbefehle A erfolgt oder nicht. Dies wird nachfolgend in Verbindung mit den FIG 6 und 7 näher erläutert.

Gemäß FIG 6 sind zusätzlich zu den Schritten S1 bis S6 (vergleiche FIG 2) zumindest weitere Schritte S21 bis S23 vorhanden.

Im Schritt S21 gibt die Steuereinrichtung 6 die ihr vorgegebenen Ansteuerbefehle A unmodifiziert an den Spindelantrieb 3 aus. Die Solldrehzahl n* der Werkstückaufnahme 1 ist im Rahmen der Ausführung des Schrittes S21 also konstant und gleich der Nenndrehzahl n0.

Im Schritt S22 prüft die Steuereinrichtung 6, ob die Ausführung der Ansteuerbefehle A beendet werden soll. Wenn ja, ist die Vorgehensweise von FIG 6 beendet. Anderenfalls geht die Steuereinrichtung 6 zum Schritt S23 über.

Im Schritt S23 prüft die Steuereinrichtung 6, ob ihr vom Benutzer 11 der Bearbeitungsmaschine über eine Mensch-Maschine-Schnittstelle 14 (siehe FIG 1) ein Ratterunterdrückungsbefehl R vorgegeben wird. Wenn dies der Fall ist, geht die Steuereinrichtung 6 zum Schritt S2 über. Anderenfalls geht die Steuereinrichtung 6 zum Schritt S21 zurück.

Im Rahmen der Vorgehensweise von FIG 6 modifiziert die Steuereinrichtung 6 somit die ihr vorgegebenen Ansteuerbefehle A nur dann, wenn ihr der Ratterunterdrückungsbefehl R vorgegeben wird. Anderenfalls gibt die Steuereinrichtung 6 die ihr vorgegebenen Ansteuerbefehle A unmodifiziert an den Spindelantrieb 3 aus.

Es ist möglich, dass bei der Vorgehensweise von FIG 6 keine weiteren Schritte vorhanden sind. In diesem Fall geht die Steuereinrichtung 6, wenn die Prüfung des Schrittes S6 negativ verläuft, zum Schritt S4 zurück, siehe den gestrichelten Pfeil in FIG 6. Es ist jedoch möglich, dass ein Schritt S24 vorhanden ist. Wenn der Schritt S24 vorhanden ist, geht die Steuereinrichtung 6 im Nein-Zweig des Schrittes S6 zum Schritt S24 über. Im Schritt S24 prüft die Steuereinrichtung 6, ob der Ratterunterdrückungsbefehl R vom Benutzer 11 der Bearbeitungsmaschine zurückgenommen wurde. Wenn dies nicht der Fall ist, geht die Steuereinrichtung 6 zum Schritt S4 zurück. Anderenfalls geht sie zum Schritt S21 zurück.

Es ist selbstverständlich möglich, den Ratterunterdrückungsbefehl R jederzeit vorzugeben und gegebenenfalls auch zurückzunehmen. Falls der Ratterunterdrückungsbefehl R ,,mitten" in der Ausführung des Teileprogramms 7 vorgegeben bzw. zurückgenommen wird, erfolgt die Umschaltung selbstverständlich nur für die zu diesem Zeitpunkt noch nicht ausgeführten Ansteuerbefehle A.

Es ist weiterhin möglich, dass dem Schritt S21 Schritte S26 bis S28 nachgeordnet sind. Wenn die Schritte S26 bis S28 vorhanden sind, nimmt die Steuereinrichtung 6 im Schritt S26 vom Spindelantrieb 3 und/oder vom Bearbeitungswerkzeug 5 Istgrö-βen I entgegen. Bei den Istgrößen I kann es sich beispielsweise um Lage-, Drehzahl-, Beschleunigungs- oder Stromistwerte handeln. Anhand der Istgrößen I ermittelt die Steuereinrichtung 6 in diesem Fall im Schritt S27 selbsttätig einen Ratterwert RW. Der Ratterwert RW ist für die Bearbeitung des Werkstücks 2 durch das Bearbeitungswerkzeug 5 charakteristisch. Beispielsweise kann die Steuereinrichtung 6 im Rahmen des Schrittes S27 über einen vorbestimmten Drehwinkel der Werkstückaufnahme 1 - beispielsweise eine Umdrehung der Werkstückaufnahme 1 - einen Mittelwert der Istgrößen I und einen Schwankungs- bzw. Rauschwert der Istgrößen I ermitteln. Der Quotient von Rauschwert und Mittelwert der Istgrößen I ist in der Regel ein gutes Maß für den Ratterwert RW. Im Schritt S28 gibt die Steuereinrichtung 6 den ermittelten Ratterwert RW über die Mensch-Maschine-Schnittstelle 14 an den Benutzer 11 der Bearbeitungsmaschine aus.

Der Vollständigkeit halber sei erwähnt, dass auch dem Schritt S5 Schritte nachgeordnet sein können, die inhaltlich mit den Schritten S26 bis S28 korrespondieren. Dies ist in FIG 6 nur der Übersichtlichkeit halber nicht mit dargestellt.

Die Vorgehensweise von FIG 7 stimmt über weite Strecken mit der von FIG 6 überein. Im Gegensatz zu FIG 6 sind jedoch die Schritte S26 und S27 im Rahmen der Vorgehensweise von FIG 7 zwingend vorhanden. Der Schritt S28 kann vorhanden sein, kann jedoch ebenso entfallen.

Die Schritte S21 und S22 sind ebenfalls zwingend vorhanden. Der Schritt S23 ist im Rahmen der Vorgehensweise von FIG 7 durch einen Schritt S31 ersetzt. Im Schritt S31 prüft die Steuereinrichtung 6, ob der im Schritt S27 ermittelte Ratterwert RW oberhalb eines Grenzwerts G liegt. Ist dies der Fall, geht die Steuereinrichtung 6 zum Schritt S2 über. Anderenfalls geht die Steuereinrichtung 6 zum Schritt S21 zurück.

Der wesentliche Unterschied zwischen den FIG 6 und 7 besteht also darin, dass bei der Vorgehensweise von FIG 6 der Steuereinrichtung 6 mittels des vom Benutzer 11 vorgegebenen Ratterunterdrückungsbefehls R vorgegeben wird, ob sie die Ansteuerwerte A für den Spindelantrieb 3 modifiziert oder nicht. Bei der Vorgehensweise von FIG 7 entscheidet dies die Steuereinrichtung 6 selbsttätig anhand des ermittelten Ratterwertes RW.

Der (optionale) Schritt S24 von FIG 6 entfällt bei der Vorgehensweise von FIG 7 ebenfalls. Er kann gegebenenfalls durch einen Schritt S32 ersetzt sein. Wenn der Schritt S32 vorhanden ist, prüft die Steuereinrichtung 6 im Schritt S32, ob der ermittelte Ratterwert RW unterhalb eines Grenzwerts G' liegt. Wenn dies der Fall ist, geht die Steuereinrichtung 6 zum Schritt S21 zurück. Anderenfalls geht sie zum Schritt S4 über.

Wenn der Schritt S32 vorhanden ist, müssen mit den Schritten S26 und S27 korrespondierende Schritte S33 und S34 selbstverständlich dem Schritt S5 nachgeordnet sein. Wenn der Schritt S32 vorhanden ist, ist weiterhin der Grenzwert G' des Schrittes S32 vorzugsweise etwas kleiner als der Grenzwert G des Schrittes S31. Dadurch wird ein hysteresebehaftetes Umschalten zwischen Modifizieren der Ansteuerbefehle A und nicht Modifizieren der Ansteuerbefehle A erreicht.

Die Vorgehensweisen der FIG 6 und 7 sind weiterhin ohne weiteres miteinander kombinierbar. In diesem Fall können die Schritte S23 und S31 alternativ mittels einer logischen Und-Verknüpfung oder einer logischen Oder-Verknüpfung verknüpft sein. Analoge Ausführungen gelten für die Schritte S24 und S32, falls sie vorhanden sind.

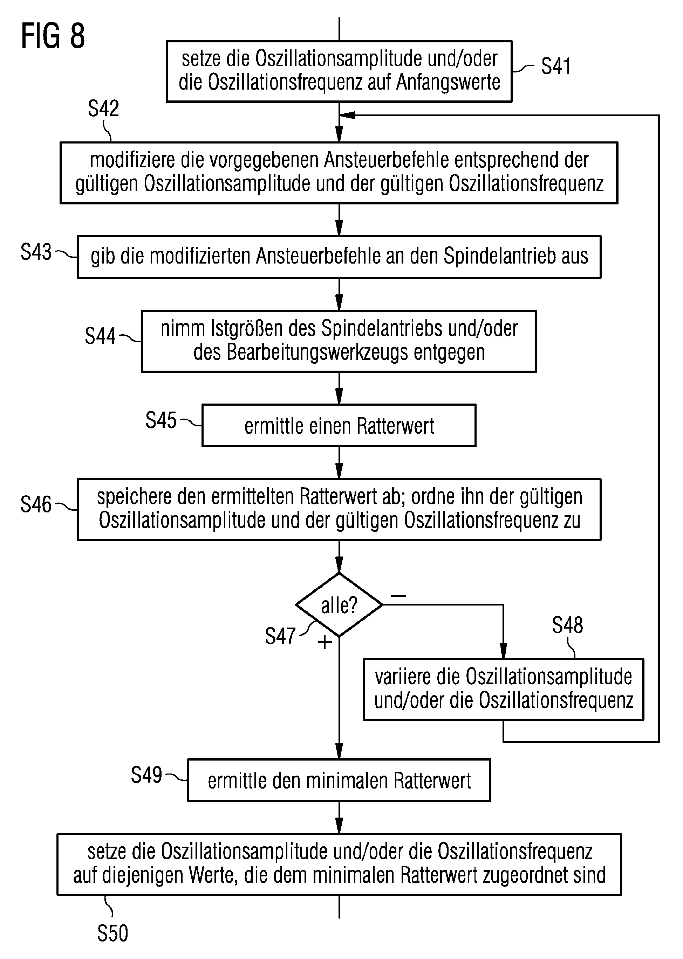

Nachfolgend wird in Verbindung mit FIG 8 eine weitere Möglichkeit zur Bestimmung der Oszillationsamplitude δn und/oder der Oszillationsfrequenz f erläutert. FIG 8 zeigt somit ebenfalls eine mögliche Ausgestaltung des Schrittes S3 von FIG 2. Die Vorgehensweise von FIG 8 ist alternativ zur Vorgehensweise von FIG 5. Die Vorgehensweise von FIG 8 ist jedoch - ebenso wie die Vorgehensweise von FIG 5 - nach Belieben mit den Vorgehensweisen der FIG 6 und/oder 7 kombinierbar.

Gemäß FIG 8 setzt die Steuereinrichtung 6 die Oszillationsamplitude δn und/oder die Oszillationsfrequenz f in einem Schritt S41 zunächst auf Anfangswerte. In einem Schritt S42 modifiziert die Steuereinrichtung 6 die ihr vorgegebenen Ansteuerbefehle A entsprechend der momentan gültigen Oszillationsamplitude δn und der momentan gültigen Oszillationsfrequenz f. In einem Schritt S43 gibt die Steuereinrichtung 6 die von ihr ermittelten modifizierten Ansteuerbefehle A' an den Spindelantrieb 3 aus.

In einem Schritt S44 nimmt die Steuereinrichtung 6 die Istgrößen I des Spindelantriebs 3 und/oder des Bearbeitungswerkzeugs 5 entgegen. In einem Schritt S45 ermittelt die Steuereinrichtung 6 den Ratterwert RW. Die Schritte S44 und S45 entsprechen inhaltlich den bereits erläuterten Schritten S26 und S27, siehe die Ausführungen zu FIG 6.

In einem Schritt S46 speichert die Steuereinrichtung 6 den ermittelten Ratterwert RW ab. Sie ordnet ihn hierbei der derzeit gültigen Oszillationsamplitude δn und der derzeit gültigen Oszillationsfrequenz f zu.

In einem Schritt S47 prüft die Steuereinrichtung 6, ob sie die Schritte S42 bis S46 bereits für alle abzuprüfenden Oszillationsamplituden δn und/oder Oszillationsfrequenzen f ausgeführt hat. Wenn dies nicht der Fall ist, geht die Steuereinrichtung 6 zu einem Schritt S48 über, in dem sie die Oszillationsamplitude δn und/oder die Oszillationsfrequenz f variiert. Sodann geht sie zum Schritt S42 zurück.

Wenn die Steuereinrichtung 6 die Schritte S42 bis S46 bereits für alle abzuprüfenden Oszillationsamplituden δn und/oder Oszillationsfrequenzen f ausgeführt hat, geht die Steuereinrichtung 6 zu einem Schritt S49 über. Im Schritt S49 ermittelt die Steuereinrichtung 6 den minimalen Ratterwert RW, den sie im Rahmen der wiederholten Ausführung des Schrittes S46 abgespeichert hat. In einem nachfolgenden Schritt S50 setzt die Steuereinrichtung 6 die Oszillationsamplitude δn und/oder die Oszillationsfrequenz f auf diejenigen Werte, die dem im Schritt S49 aufgefundenen minimalen Ratterwert RW zugeordnet sind.

Im Rahmen der Vorgehensweise von FIG 8 führt die Steuereinrichtung 6 somit zunächst einen Messlauf durch (Schritte S41 bis S48), in dem sie die Oszillationsamplitude δn und/oder die Oszillationsfrequenz f variiert. Während des Messlaufs ermittelt sie jeweils den Ratterwert RW. Sodann (Schritte S49 und S50) setzt sie die Oszillationsamplitude δn und/oder die Oszillationsfrequenz f auf diejenigen Werte, bei denen der Ratterwert RW minimal ist.

Die vorliegende Erfindung weist viele Vorteile auf. Insbesondere ist auf einfache und deterministische Weise ein Rattern bei der Bearbeitung von Werkstücken vermeidbar. Auf eine vorhandene oder auch nicht vorhandene Erfahrung des Benutzers 11 der Bearbeitungsmaschine kommt es nicht mehr an.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuereinrichtung für eine Bearbeitungsmaschine,
- wobei die Bearbeitungsmaschine eine Werkstückaufnahme (1) für ein Werkstück (2) aufweist, die mittels eines Spindelantriebs (3) rotiert wird,
- wobei die Bearbeitungsmaschine ein Bearbeitungswerkzeug (5) aufweist, mittels dessen das Werkstück (2) während des Rotierens der Werkstückaufnahme (1) bearbeitet wird,
- wobei die Steuereinrichtung derart ausgebildet ist, dass sie selbsttätig
-- anhand ihr vorgegebener Ansteuerbefehle (A) eine Nenndrehzahl (n0) ermittelt, mit der die Werkstückaufnahme (1) rotieren würde, wenn die Steuereinrichtung die vorgegebenen Ansteuerbefehle (A) an den Spindelantrieb (3) ausgäbe,
-- anhand der Nenndrehzahl (n0) und einer maximal zulässigen Belastung des Spindelantriebs (3) eine Oszillationsamplitude (δn) und/oder eine Oszillationsfrequenz (f) ermittelt,
-- die ihr vorgegebenen Ansteuerbefehle (A) anhand der Oszillationsamplitude (δn) und der Oszillationsfrequenz (f) modifiziert und
-- die modifizierten Ansteuerbefehle (A') an den Spindelantrieb (3) ausgibt und dadurch der Werkstückaufnahme (1) direkt oder indirekt eine Solldrehzahl (n^{*}) vorgibt, die mit der Oszillationsamplitude (δn)und der Oszillationsfrequenz (f) um die Nenndrehzahl (n0) oszilliert.

2. Steuereinrichtung nach Anspruch 1,
**dadurch gekennzeichnet, dass** die Steuereinrichtung die ihr vorgegebenen Ansteuerbefehle (A) derart modifiziert, dass die Solldrehzahl (n^{*}) sinusförmig oder dreieckförmig um die Nenndrehzahl (n0) oszilliert.

3. Steuereinrichtung nach Anspruch 1 oder 2,
**dadurch gekennzeichnet, dass** die Oszillationsamplitude (δn) mindestens das 0,1-fache und maximal das 0,25-fache der Nenndrehzahl (n0) ist.

4. Steuereinrichtung nach Anspruch 1, 2 oder 3,
**dadurch gekennzeichnet, dass** die Oszillationsfrequenz (f) mindestens das 0,05-fache und maximal das 0,40-fache der Nenndrehzahl (n0) ist.

5. Steuereinrichtung nach einem der obigen Ansprüche,
**dadurch gekennzeichnet, dass** die Steuereinrichtung die Oszillationsfrequenz (f) und die Oszillationsamplitude (δn) zunächst auf Maximalwerte (δnmax, fmax) setzt, prüft, ob mit diesen Werten (δnmax, fmax) die maximal zulässige Belastung des Spindelantriebs (3) eingehalten wird, und erforderlichenfalls die Oszillationsfrequenz (f) absenkt, die Oszillationsamplitude (δn) jedoch beibehält.

6. Steuereinrichtung nach einem der obigen Ansprüche,
**dadurch gekennzeichnet, dass** die Steuereinrichtung derart ausgebildet ist, dass sie vom Spindelantrieb (3) und/oder vom Bearbeitungswerkzeug (5) Istgrößen (I) entgegen nimmt und anhand der Istgrößen (I) selbsttätig einen für die Bearbeitung des Werkstücks (2) durch das Bearbeitungswerkzeug (5) charakteristischen Ratterwert (RW) ermittelt.

7. Steuereinrichtung nach Anspruch 6,
**dadurch gekennzeichnet, dass** die Steuereinrichtung derart ausgebildet ist, dass sie den Ratterwert (RW) über eine Mensch-Maschine-Schnittstelle (14) an einen Benutzer (11) der Bearbeitungsmaschine ausgibt.

8. Steuereinrichtung nach Anspruch 6 oder 7,
**dadurch gekennzeichnet, dass** die Steuereinrichtung derart ausgebildet ist, dass sie die vorgegebenen Ansteuerbefehle (A) an den Spindelantrieb (3) ausgibt, den hierbei auftretenden Ratterwert (RW) ermittelt, die ihr vorgegebenen Ansteuerbefehle (A) modifiziert, wenn der Ratterwert (RW) oberhalb eines Grenzwerts (G) liegt, und anderenfalls die ihr vorgegebenen Ansteuerbefehle (A) weiter unmodifiziert an den Spindelantrieb (3) ausgibt.

9. Steuereinrichtung nach Anspruch 6, 7 oder 8,
**dadurch gekennzeichnet, dass** die Steuereinrichtung derart ausgebildet ist, dass sie zunächst einen Messlauf durchführt, in dem sie die Oszillationsamplitude (δn) und/oder die Oszillationsfrequenz (f) variiert, während des Messlaufs jeweils den Ratterwert (RW) ermittelt und sodann die Oszillationsamplitude (δn) und/oder die Oszillationsfrequenz (f) auf diejenigen Werte setzt, bei denen der Ratterwert (RW) minimal ist.

10. Steuereinrichtung nach einem der obigen Ansprüche,
**dadurch gekennzeichnet, dass** die Steuereinrichtung derart ausgebildet ist, dass ihr über eine Mensch-Maschine-Schnittstelle (14) von einem Benutzer (11) der Bearbeitungsmaschine ein Ratterunterdrückungsbefehl (R) vorgebbar ist, sie die ihr vorgegebenen Ansteuerbefehle (A) nur dann modifiziert, wenn ihr der Ratterunterdrückungsbefehl (R) vorgegeben wird, und sie anderenfalls die ihr vorgegebenen Ansteuerbefehle (A) unmodifiziert an den Spindelantrieb (3) ausgibt.

11. Systemprogramm, das Maschinencode (12) umfasst, der von einer Steuereinrichtung (6) für eine Bearbeitungsmaschine unmittelbar abarbeitbar ist,
- wobei die Bearbeitungsmaschine eine Werkstückaufnahme (1) für ein Werkstück (2) aufweist, die mittels eines Spindelantriebs (3) rotiert wird,
- wobei die Bearbeitungsmaschine ein Bearbeitungswerkzeug (5) aufweist, mittels dessen das Werkstück (2) während des Rotierens der Werkstückaufnahme (1) bearbeitet wird,
- wobei die Abarbeitung des Maschinencodes (12) durch die Steuereinrichtung (6) bewirkt, dass die Steuereinrichtung (6) derart ausgebildet wird, dass sie selbsttätig
-- anhand ihr vorgegebener Ansteuerbefehle (A) eine Nenndrehzahl (n0) ermittelt, mit der die Werkstückaufnahme (1) rotieren würde, wenn die Steuereinrichtung (6) die vorgegebenen Ansteuerbefehle (A) an den Spindelantrieb (3) ausgäbe,
-- anhand der Nenndrehzahl (n0) und einer maximal zulässigen Belastung des Spindelantriebs (3) eine Oszillationsamplitude (δn) und/oder eine Oszillationsfrequenz (f) ermittelt,
-- die ihr vorgegebenen Ansteuerbefehle (A) anhand der Oszillationsamplitude (δn) und der Oszillationsfrequenz (f) modifiziert und
-- die modifizierten Ansteuerbefehle (A') an den Spindelantrieb (3) ausgibt und dadurch der Werkstückaufnahme (1) direkt oder indirekt eine Solldrehzahl (n^{*}) vorgibt, die mit der Oszillationsamplitude (δn) und der Oszillationsfrequenz (f) um die Nenndrehzahl (n0) oszilliert.

12. Systemprogramm nach Anspruch 11,
**dadurch gekennzeichnet, dass** die Abarbeitung des Maschinencodes (12) durch die Steuereinrichtung (6) bewirkt, dass die Steuereinrichtung (6) gemäß einem der Ansprüche 2 bis 10 ausgebildet wird.

## Geänderte Patentansprüche

### Geänderte Patentansprüche gemäss Regel 137(2) EPÜ.

**1.** Steuereinrichtung für eine Bearbeitungsmaschine,
- wobei die Bearbeitungsmaschine eine Werkstückaufnahme (1) für ein Werkstück (2) aufweist, die mittels eines Spindelantriebs (3) rotiert wird,
- wobei die Bearbeitungsmaschine ein Bearbeitungswerkzeug (5) aufweist, mittels dessen das Werkstück (2) während des Rotierens der Werkstückaufnahme (1) bearbeitet wird,
- wobei die Steuereinrichtung derart ausgebildet ist, dass sie selbsttätig
anhand ihr vorgegebener Ansteuerbefehle (A) eine Nenndrehzahl (n0) ermittelt, mit der die Werkstückaufnahme (1) rotieren würde, wenn die Steuereinrichtung die vorgegebenen Ansteuerbefehle (A) an den Spindelantrieb (3) ausgäbe,
-- anhand der Nenndrehzahl (n0) und einer maximal zulässigen Belastung des Spindelantriebs (3) eine Oszillationsamplitude (δn) und eine Oszillationsfrequenz (f) ermittelt,
-- die ihr vorgegebenen Ansteuerbefehle (A) anhand der Oszillationsamplitude (δn) und der Oszillationsfrequenz (f) modifiziert und
-- die modifizierten Ansteuerbefehle (A') an den Spindelantrieb (3) ausgibt und **dadurch** der Werkstückaufnahme (1) direkt oder indirekt eine Solldrehzahl (n*) vorgibt, die mit der Oszillationsamplitude (δn) und der Oszillationsfrequenz (f) um die Nenndrehzahl (n0) oszilliert,
- wobei die Steuereinrichtung zur Ermittlung der Oszillationsfrequenz (f) und der Oszillationsamplitude (δn) die Oszillationsfrequenz (f) und die Oszillationsamplitude (δn) zunächst auf Maximalwerte (δnmax, fmax) setzt, prüft, ob mit diesen Werten (δnmax, fmax) die maximal zulässige Belastung des Spindelantriebs (3) eingehalten wird, und erforderlichenfalls die Oszillationsfrequenz (f) absenkt, die Oszillationsamplitude (δn) jedoch beibehält.

**2.** Steuereinrichtung nach Anspruch 1,
**dadurch gekennzeichnet, dass** die Steuereinrichtung die ihr vorgegebenen Ansteuerbefehle (A) derart modifiziert, dass die Solldrehzahl (n*) sinusförmig oder dreieckförmig um die Nenndrehzahl (n0) oszilliert.

**3.** Steuereinrichtung nach Anspruch 1 oder 2,
**dadurch gekennzeichnet, dass** die Oszillationsamplitude (δn) mindestens das 0,1-fache und maximal das 0,25-fache der Nenndrehzahl (n0) ist.

**4.** Steuereinrichtung nach Anspruch 1, 2 oder 3,
**dadurch gekennzeichnet, dass** die Oszillationsfrequenz (f) mindestens das 0,05-fache und maximal das 0,40-fache der Nenndrehzahl (n0) ist.

**5.** Steuereinrichtung nach einem der obigen Ansprüche,
**dadurch gekennzeichnet, dass** die Steuereinrichtung derart ausgebildet ist, dass sie vom Spindelantrieb (3) und/oder vom Bearbeitungswerkzeug (5) Istgrößen (I) entgegen nimmt und anhand der Istgrößen (I) selbsttätig einen für die Bearbeitung des Werkstücks (2) durch das Bearbeitungswerkzeug (5) charakteristischen Ratterwert (RW) ermittelt.

**6.** Steuereinrichtung nach Anspruch 5,
**dadurch gekennzeichnet, dass** die Steuereinrichtung derart ausgebildet ist, dass sie den Ratterwert (RW) über eine Mensch-Maschine-Schnittstelle (14) an einen Benutzer (11) der Bearbeitungsmaschine ausgibt.

**7.** Steuereinrichtung nach Anspruch 5 oder 6,
**dadurch gekennzeichnet, dass** die Steuereinrichtung derart ausgebildet ist, dass sie die vorgegebenen Ansteuerbefehle (A) an den Spindelantrieb (3) ausgibt, den hierbei auftretenden Ratterwert (RW) ermittelt, die ihr vorgegebenen Ansteuerbefehle (A) modifiziert, wenn der Ratterwert (RW) oberhalb eines Grenzwerts (G) liegt, und anderenfalls die ihr vorgegebenen Ansteuerbefehle (A) weiter unmodifiziert an den Spindelantrieb (3) ausgibt.

**8.** Steuereinrichtung nach Anspruch 5, 6 oder 7,
**dadurch gekennzeichnet, dass** die Steuereinrichtung derart ausgebildet ist, dass sie zunächst einen Messlauf durchführt, in dem sie die Oszillationsamplitude (δn) und/oder die Oszillationsfrequenz (f) variiert, während des Messlaufs jeweils den Ratterwert (RW) ermittelt und sodann die Oszillationsamplitude (δn) und/oder die Oszillationsfrequenz (f) auf diejenigen Werte setzt, bei denen der Ratterwert (RW) minimal ist.

**9.** Steuereinrichtung nach einem der obigen Ansprüche,
**dadurch gekennzeichnet, dass** die Steuereinrichtung derart ausgebildet ist, dass ihr über eine Mensch-Maschine-Schnittstelle (14) von einem Benutzer (11) der Bearbeitungsmaschine ein Ratterunterdrückungsbefehl (R) vorgebbar ist, sie die ihr vorgegebenen Ansteuerbefehle (A) nur dann modifiziert, wenn ihr der Ratterunterdrückungsbefehl (R) vorgegeben wird, und sie anderenfalls die ihr vorgegebenen Ansteuerbefehle (A) unmodifiziert an den Spindelantrieb (3) ausgibt.

**10.** Systemprogramm, das Maschinencode (12) umfasst, der von einer Steuereinrichtung (6) für eine Bearbeitungsmaschine unmittelbar abarbeitbar ist,
- wobei die Bearbeitungsmaschine eine Werkstückaufnahme (1) für ein Werkstück (2) aufweist, die mittels eines Spindelantriebs (3) rotiert wird,
- wobei die Bearbeitungsmaschine ein Bearbeitungswerkzeug (5) aufweist, mittels dessen das Werkstück (2) während des Rotierens der Werkstückaufnahme (1) bearbeitet wird,
- wobei die Abarbeitung des Maschinencodes (12) durch die Steuereinrichtung (6) bewirkt, dass die Steuereinrichtung (6) derart ausgebildet wird, dass sie selbsttätig
-- anhand ihr vorgegebener Ansteuerbefehle (A) eine Nenndrehzahl (n0) ermittelt, mit der die Werkstückaufnahme (1) rotieren würde, wenn die Steuereinrichtung (6) die vorgegebenen Ansteuerbefehle (A) an den Spindelantrieb (3) ausgäbe,
-- anhand der Nenndrehzahl (n0) und einer maximal zulässigen Belastung des Spindelantriebs (3) eine Oszillationsamplitude (δn) und eine Oszillationsfrequenz (f) ermittelt,
-- die ihr vorgegebenen Ansteuerbefehle (A) anhand der Oszillationsamplitude (δn) und der Oszillationsfrequenz (f) modifiziert und
-- die modifizierten Ansteuerbefehle (A') an den Spindelantrieb (3) ausgibt und **dadurch** der Werkstückaufnahme (1) direkt oder indirekt eine Solldrehzahl (n*) vorgibt, die mit der Oszillationsamplitude (δn) und der Oszillationsfrequenz (f) um die Nenndrehzahl (n0) oszilliert,
- wobei die Abarbeitung des Maschinencodes (12) durch die Steuereinrichtung (6) bewirkt, dass die Steuereinrichtung (6) zur Ermittlung der Oszillationsfrequenz (f) und der Oszillationsamplitude (δn) die Oszillationsfrequenz (f) und die Oszillationsamplitude (δn) zunächst auf Maximalwerte (δnmax, fmax) setzt, prüft, ob mit diesen Werten (δnmax, fmax) die maximal zulässige Belastung des Spindelantriebs (3) eingehalten wird, und erforderlichenfalls die Oszillationsfrequenz (f) absenkt, die Oszillationsamplitude (δn) jedoch beibehält.

**11.** Systemprogramm nach Anspruch 10,
**dadurch gekennzeichnet, dass** die Abarbeitung des Maschinencodes (12) durch die Steuereinrichtung (6) bewirkt, dass die Steuereinrichtung (6) gemäß einem der Ansprüche 2 bis 9 ausgebildet wird.
